# EUROPÄISCHE PATENTSCHRIFT

(11) **EP 2 363 337 B1**
(45) Veröffentlichungstag und Bekanntmachung des Hinweises auf die Patenterteilung: **06.05.2015**
(21) Anmeldenummer: 10155122.4
(22) Anmeldetag: 02.03.2010
(51) Int. Cl.: B62D 33/04

(54) **Aufbau für ein Transportfahrzeug und Kühltransportfahrzeug mit einem solchen Aufbau**
Assembly for a transport vehicle and refrigerated transport vehicle with such an assembly
Structure pour un véhicule de transport et véhicule de transport frigorifique doté d'une telle structure

(43) Veröffentlichungstag der Anmeldung: 07.09.2011
(73) Patentinhaber: Kaiser, Ria, 21077 Hamburg (DE); Lange, Hans Juergen, 21077 Hamburg (DE); Baalmann, Alfred, 27711 Osterholz-Scharmbeck (DE); Graßl, Gregor, 21684 Stade (DE)
(72) Erfinder: Kaiser, Ria, 21077 Hamburg (DE); Lange, Hans Juergen, 21077 Hamburg (DE); Baalmann, Alfred, 27711 Osterholz-Scharmbeck (DE); Graßl, Gregor, 21684 Stade (DE)
(74) Vertreter: Raffay & Fleck

(56) Entgegenhaltungen:
- EP-A2- 0 940 249
- WO-A2-2004/001149
- DE-A1- 1 630 595
- DE-A1- 19 803 908
- DE-U1-202009 016 007
- FR-A1- 2 807 379
- US-A1- 2008 174 147

## Beschreibung

Die vorliegende Erfindung betrifft einen Aufbau für ein Transportfahrzeug mit den Merkmalen des Oberbegriffs des Anspruchs 1. Sie betrifft ferner ein mit einem solchen Aufbau ausgerüstetes Kühlfahrzeug.

Transportfahrzeuge, speziell Kühltransportfahrzeuge, die gekühlte oder tiefgekühlte Ware unter Einhaltung der geforderten Kühlkette über mitunter lange Distanzen und somit auch große Zeitspannen transportieren, müssen vielfältige Anforderungen erfüllen. Dazu zählt eine funktionstüchtige und energiesparende Isolation des Transportladeraumes (gerade auch bei schwankenden Außentemperaturen und leicht verderblichen Waren) bei gleichzeitig niedrigem Gewicht der gesamten Fahrzeugaufbaustruktur. Nur so sind Kühltransportfahrzeuge mit einer hohen Wirtschaftlichkeit und ökologisch sinnvoll einsetzbar. Diese Forderungen bedingen bei der konventionellen auf geschäumtes Material als Isolierung zurückgreifenden Bauweise jedoch derzeit hohe Wandstärken im Aufbau, um die geforderten Dämmwerte annähernd zu erreichen. Diese hohen Wandstärken führen zu einer deutlichen Einschränkung des Laderaumvolumens und der zulässigen Gewichtszuladung. Zusätzlich müssen energieintensive Kühlaggregate betrieben werden, um die begrenzte Isolationseigenschaft dieser Aufbauten auszugleichen. Dieser Energiebedarf muss in die Gesamtkalkulation der Transport- bzw. Energiekosten einbezogen werden. Dünnere Wandelemente nach herkömmlicher Bauart verfügen entweder nicht über ausreichende Isolationseigenschaften oder bei ausreichenden Isolationseigenschaften nicht über die strukturelle Festigkeit, die die Fahrzeugstruktur aufgrund der hohen Fahrdynamik erfordert.

Ein Aufbau für ein Transportfahrzeug, der für die Isolierungswirkung auf eine andere als eine reine Isolierung mit geschäumten Dämmmaterialien zurückgreift, ist in der DE 10 2005 054 538 A1 und in der WO 2004001149 beschrieben. Bei dem dort offenbarten Aufbau bestehen Seitenwände, Boden und/oder Decke aus einem geschichteten System mit zwei äußeren Deckschichten, die als aus Stahl oder glasfaserverstärktem Kunststoff (GFK) realisierbar beschrieben sind, und zwischen diesen Deckschichten angeordneten weiteren Schichten. Eine dieser Schichten wird durch Vakuumisolationspaneele gebildet, als weitere, in ihrer Schichtdicke annähernd gleich starke Schicht ist eine Schaumschicht angeordnet, die einen weiteren Anteil an der Isolierung und zugleich eine stabilisierende Wirkung haben soll. Ferner ist zwischen den Vakuumisolationspaneelen ein Stützkorsett aus vergleichsweise breit bemessenen Schaumträgerelementen gebildet, die die einzelnen Vakuumisolationspaneele Stirnseite zueinander auf Abstand hält.

Bei diesem vorbekannten Aufbau, der zwar bereits die vorteilhafte Isolationswirkung von Vakuumisolationspaneelen mit einbezieht, bestehen aber weiterhin Nachteile und Unzulänglichkeiten. So ist die gesamte Wandstärke bei diesem Aufbau nicht dünn genug für eine maximale Transporteffizienz. Das Ladevolumen wird durch die große Wandstärke noch immer signifikant limitiert, ein durch die insgesamt gegebene Masse nach wie vor hohes Strukturgewicht erlaubt nur eine geringere Maximalzuladung. Durch das erhöhte Eigengewicht ist auch bei nur geringer Zuladung der Treibstoffverbrauch vergleichsweise hoch mit korrespondierend hohem CO₂-Ausstoß. Insgesamt liegen so die Transportkosten und die Umweltbeeinträchtigung hoch. Hier eine Verbesserung anzugeben, ist Aufgabe der Erfindung.

Entsprechend soll mit der Erfindung insbesondere ein verbesserter Aufbau für ein Transportfahrzeug gemäß dem Oberbegriff des Anspruchs 1 angegeben werden, der in mit leichterer und in dünnerer Wandstärke auszubildender Bauweise dennoch sehr gute thermische Isolierungseigenschaften aufweist.

Diese Aufgabe wird gelöst durch einen Aufbau für ein Transportfahrzeug mit den Merkmalen des Patentanspruchs 1. Vorteilhafte Weiterbildungen eines solchen Aufbaus sind in den abhängigen Ansprüchen 2 bis 10 angegeben. Ein weiterer Aspekt der Lösung dieser Aufgabe besteht in einem Kühltransportfahrzeug mit einem wie zuvor genannten neuartigen Aufbau.

Mit der Erfindung wird ein gegenüber dem Aufbau nach der DE 102 2005 054 538 A1 deutlich vereinfachter, mit geringerem Strukturgewicht herstellbar und dünnwandiger ausführbarer Aufbau mit sehr guten thermischen Isolationseigenschaften offenbart. Dies wird dadurch erzielt, dass der erfindungsgemäße Aufbau Deckschichten aus einem Kohlenstofffaserverbundwerkstoff (CFK) aufweist, zwischen denen als alleinige Isolierschicht eine Schicht aus Vakuumisolationspaneelen angeordnet ist. Es entfallen hierbei insbesondere weitere schaumgebildete Isolierschichten oder Stützschichten, lediglich dünn gebildete Oberflächenschutzschichten zum Schutz der empfindlichen Oberflächen der Vakuumisolationspaneelen können vorgesehen sein. Diese Oberflächenschutzschichten weisen jedoch eine geringe Stärke von lediglich im Bereich von maximal 1 bis 3 mm auf. Insoweit sind die Deckschichten (ggf. unter Zwischenlage der Oberflächenschutzschicht) unmittelbar auf den äußeren Oberflächen der Vakuumisolationspaneelen aufgelegt, wobei im Sinne der Erfindung eine unmittelbare Auflage gerade auch die Verwendung dünner Oberflächenschutzschichten und Einbeziehen derselben zwischen der Deckschicht und der Vakuumisolationspaneele mit einschließt, so lange die Oberflächenschutzschichten keine erheblichen Wandstärken von mehr als 3 mm aufweisen.

Gerade die Kombination aus dem Material CFK als Deckschichten und der Zwischenlage einer Schicht aus Vakuumisolationspaneelen erlaubt wegen der hohen Steifigkeit und Festigkeit des Kohlenstofffaserverbundwerkstoffes (CFK) bei gleichzeitig geringem spezifischen Gewicht dieses Werkstoffes und der hohen thermischen Isolationswirkung von Vakuumisolationspaneele eine zugleich dünnwandige und dennoch hoch effiziente Bauweise eines thermisch isolierenden Aufbaus. Die hohe strukturelle Festigkeit des CFK erübrigt den Einsatz weiterer Stützstrukturen zum Erhalt der erforderlichen strukturellen Festigkeit eines Aufbaus insgesamt, ohne dass hier Einschnitte hinzunehmen wären, die etwa das Abfangen der dynamisch auftretenden Fahrlasten beeinträchtigen würden. Die hervorragenden Isolationseigenschaften der Vakuumisolationspaneelen gestatten es, mit einer einzigen Lage derartiger Paneelen und unter Verzicht auf weitere Schichten aus Schaumisolierung eine ausreichende bzw. eine verbesserte Isoliereigenschaft einer solchen Struktur zu erhalten, so dass ein jedenfalls zum Teil so gebildeter Aufbau bei vergleichbarer thermischer Isolationswirkung dünnwandiger und leichter als im Stand der Technik oder aber bei gleicher Stärke mit immer noch reduziertem Gewicht und deutlich verbesserter thermischer Isolationswirkung als im Stand der Technik realisiert werden kann. Daraus ergeben sich dann die bereits angedeuteten Vorteile einer höheren Nutzlastzuladung, eines geringen Leergewichts und eines erhöhten Laderaumvolumens. Mit diesen Vorteilen einhergehend die bessere Wirtschaftlichkeit und Umweltverträglichkeit von mit Transportfahrzeugen mit entsprechenden Aufbauten durchgeführten Transporten, die sich in einem verringerten Verbrauch an Treibstoff und geringeren Emissionen des klimaschädlichen Gases CO₂ ausdrücken.

In einer bevorzugten Variante der Erfindung sind die Vakuumisolationspaneelen mit den Deckschichten unmittelbar verklebt, wobei dann die Klebstoffschichten jeweils eine Oberflächenschutzschicht bilden. Bei geeigneter Auswahl des Klebstoffes und ausreichender Dicke der Klebstoffschicht wird verhindert, dass das vergleichsweise harte Material der CFK-Deckschichten an der Oberfläche der Vakuumisolationspaneelen scheuert und dort Beschädigungen verursacht, die schlimmstenfalls zu einem Verlust des Vakuums und damit einer Beeinträchtigung der thermischen Isolationswirkung führen könnten.

In einer weiteren bevorzugten Ausführungsvariante wird als Oberflächenschutzschicht jedenfalls einseitig, bevorzugt beidseitig eine Textilschicht bzw. werden solche Textilschichten verwendet, wobei hier eine Vlieskaschierung besonders bevorzugt wird. Die Vlieskaschierung kann dabei entweder auf die der Vakuumisolationspaneele zugewandten Innenseite der Deckschicht aufkaschiert werden, es ist aber auch möglich und wird bevorzugt, die Vliesschichten auf die Oberflächen der Vakuumisolationspaneelen aufzukaschieren.

Da für die Errichtung bspw. einer Seitenwand des erfindungsgemäßen Aufbaus in der Regel nicht eine einzige großflächige Vakuumisolationspaneele hergestellt werden kann (Herstellungen derart großer Paneele sind nicht oder nur sehr schwer möglich, sie lassen sich zudem nicht praktikabel handhaben), wird in der Praxis der zwischen zwei großflächig herstellbaren Deckschichten bestehende Zwischenraum mit einzelnen Vakuumisolationspaneelen fachartig ausgefüllt. Um diese Art der Struktur weiter zu verstärken und zu stützen, ist es von Vorteil, wenn jedenfalls in einer Richtung (z.B. bei einer Seitenwand in Richtung der Vertikalen) Stützstrukturen vorgesehen sind, die mit beiden Deckschichten fest verbunden sind und an welchen aneinander angrenzende Vakuumisolationspaneelen mit ihren Stirnseiten anliegen, wobei in dem Raum zwischen den Stirnseiten die Stützstrukturen blechartig dünn ausgebildet sind. Besonders wichtig ist die blechartig dünne Ausbildung der Stützstrukturen, da sie es erlaubt, die einzelnen Vakuumisolationspaneele maximal dicht aneinander gereiht anzuordnen, so dass zwischen den Paneelen keine verbreiterten "Lücken" und damit Wärmebrücken entstehen. Damit wird, anders als in der DE 102 005 054 538 A1, in der eine schaumartige Stützstruktur mit erheblicher Ausdehnung zwischen zwei stirnseitig aneinander angrenzenden Vakuumisolationspaneelen vorhanden ist, der dort vergleichsweise große Abstand zwischen diesen Paneelen deutlich reduziert, die Isolationswirkung der Vakuumisolationspaneelenschicht insgesamt klar verbessert. Auch diese Maßnahme unterstützt dabei, allein durch Verwendung von Vakuumisolationspaneelen eine dem heutigen Stand entsprechende oder sogar verbesserte Isolierung zu erzielen und somit auf eine zusätzliche geschäumte Isolationsschicht verzichten zu können.

Mit Vorteil sind die Stützstrukturen wiederum aus einem Kohlenstofffaserverbundwerkstoff (CFK) gebildet, da auch hinsichtlich dieser Strukturen sowohl die Leichtgewichtigkeit als auch die hohe Festigkeit und Stabilität von besonderem Vorteil sind.

Eine Möglichkeit die Stützstrukturen auszubilden, besteht darin, diese als U-Profile zu gestalten mit jeweils an den einander gegenüberliegenden Deckschichten an deren Innenseite fest verbundenen, insbesondere verklebten Schenkeln und einer zwischen den Deckschichten verlaufenden Basis, an der die dort aneinander angrenzenden Stirnseiten benachbarter Vakuumisolationspaneelen anstoßen. Diese Basis ist dabei blechartig dünn ausgebildet. Bei einer solchen Ausgestaltung als U-Profile ist ferner von Vorteil, wenn die mit ihren Enden zwischen den Schenkeln des U-Profils liegenden stirnseitigen Abschnitte der betroffenen Vakuumisolationspaneelen in ihrer Stärke so reduziert sind, dass ihre Oberflächen, ggf. mit aufgebrachter Zwischenlage, mit der angrenzenden Oberfläche der Schenkel des U-Profils in diesem Bereich fluchten. So ergibt sich am Ende eine plane Außenfläche der Gesamtkonstruktion, die mit der abschließenden Deckschicht vollflächig verbunden, insbesondere verklebt werden kann, um so eine insgesamt haltbare und belastbare, hoch stabile Wand, einen solchen Boden oder eine Decke eines erfindungsgemäßen Aufbaus zu bilden.

Alternativ zu einer Ausbildung als U-Profile können die Stützstrukturen auch durch Z-artig zwischen den Deckschichten verlaufende und mit ihren äußeren Flächen mit den Deckschichten fest verbundene Profilstrukturen ausgebildet sein, wobei der mittlere Bereich zwischen den äußeren Z-Schenkeln die beiden Deckschichten überbrückend verbindet und erneut die blechartig dünne Materialstärke aufweist. Bei einer solchen Ausgestaltung kann der jeweils sich über eine der beiden angrenzenden Vakuumisolationspaneele erstreckende Schenkel des Z sich über die gesamte Paneele hin erstrecken und dann einstückig hinter der Paneele wiederum in die gegenüber liegende Ebene geführt sein, so dass insgesamt eine Art wellenförmige Struktur mit "Aufnahmetaschen" für Vakuumisolationspaneele steht. So bilden die jeweiligen die Vakuumisolationspaneele einseitig überdeckenden Schichten dieser Struktur bereits einen Teil der Deckschicht, eine weitere durchgehende Schicht wird zum Bilden der gesamten Deckschicht, noch aufzubringen sein, um die jeweils nicht von dieser Struktur überdeckten Bereich der Vakuumisolationspaneelen ebenfalls abzudecken und auch dort die nötige Stabilität zu schaffen.

Die Vakuumisolationspaneelen können jede beliebige im Stand der Technik bekannte Form aufweisen, z.B. solche, wie in der DE 10 2005 054 538 A1 beschrieben. Sie weisen mit Vorteil jeweils ein plattenförmiges, druckstabiles, hochporöses Kernmaterial und eine die Oberflächen des Kernmaterials rundum vakuumdicht verschließende Folie auf, wobei der Bereich des Kernmaterials evakuiert ist. Die Folie kann z.B. eine Aluminium-Verbund-Folie sein, die einerseits ein gutes Maß an Festigkeit, andererseits auch strukturelle Leichtigkeit gewährleistet und darüber hinaus eine zusätzliche Isolationswirkung gegen Wärmestrahlung bietet.

Mit Vorteil ist die Gesamtstärke der Schichtung aus Deckschichten und dazwischen angeordneten Isolationspaneelen (ggf. mit zwischen gebrachten Oberflächenschutzschichten) im Bereich von 5 bis 20 mm gelegen, weist insbesondere eine Stärke von etwa 15 mm auf.

Weitere Merkmale und Vorteile der Erfindung ergeben sich aus der nachfolgenden Beschreibung eines Ausführungsbeispieles anhand der beigefügten Figuren. Dabei zeigen:
- Figur 1: in einer schematischen Darstellung von der Seite einen Sattelauflieger mit einem erfindungsgemäßen Aufbau, wobei mit gestrichelten Linien die Unterteilung der Isolationsschicht in einzelne Vakuumisolationspaneele dargestellt ist,
- Figur 2: in einem Querschnitt eine Seitenwand-, Boden- bzw. Deckenkonstruktion des erfindungsgemäßen Aufbaus an einer stirnseitigen Stoßstelle zweier benachbarter Vakuumisolationspaneele,
- Figur 3: einen Abschnitt vergleichbar der Figur 2 mit einem abgewandelten Aufbau, nämlich mit einer Oberflächenschutzschicht in Form einer Vlieskaschierung, und
- Figur 4: eine alternative Gestaltung der Stoßstellen zwischen den einzelnen Vakuumisolationspaneelen in einer schematischen Aufsichtsdarstellung dreidimensionaler Ansicht.

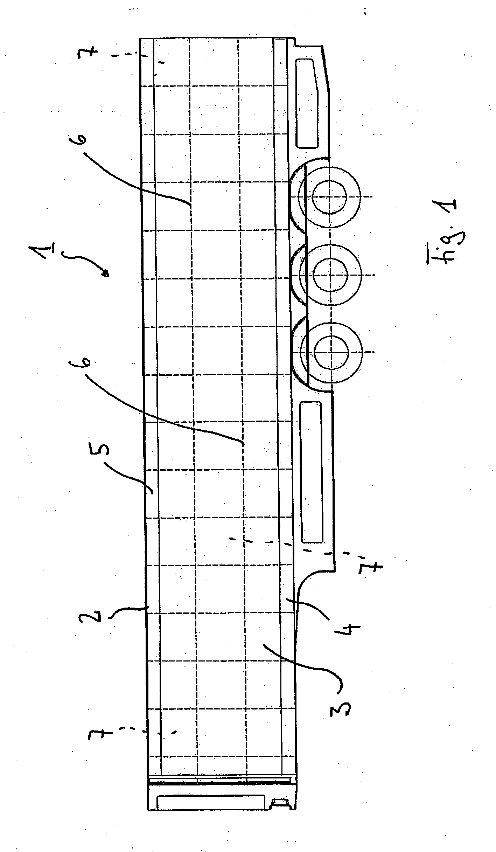

In Fig. 1 ist als Beispiel eines mit einem erfindungsgemäßen Aufbau auszurüstenden Fahrzeuges ein Sattelauflieger 1 dargestellt. Der Sattelauflieger 1 weist einen kastenartigen Aufbau 2 auf, der durch Seitenwände, einen Boden und eine Decke begrenzt ist, von denen hier eine Seitenwand 3 gezeigt und der Boden 4 sowie die Decke 4 angedeutet sind. An der heckseitigen Stirnseite ist der Aufbau 2 mit einer Zugangsöffnung zum Innenraum versehen, die mit entsprechend isolierten Türen verschließbar ist.

Der Aufbau 2 des Sattelaufliegers 1 ist an den Seitenwänden, dem Boden 4 und der Decke 5 mit einem Wandaufbau versehen, der eine zwischen den Schichten angeordnete Vakuumisolationspaneele 7 vorsieht. Die Bestückung mit einzelnen Vakuumisolationspaneelen 7 ist hier angedeutet, indem mit gestrichelten Linien 6 Felder eingezeichnet sind, die mit Vakuumisolationspaneelen 7 belegt sind. Die Vakuumisolationspaneelen 7 sind tatsächlich in der in Fig. 1 gezeigten Seitendarstellung nicht sichtbar, sie werden von einer durchgehenden Deckschicht überdeckt, die in erfindungsgemäßer Weise aus einem Kohlenfaserverbundwerkstoff (CFK) besteht.

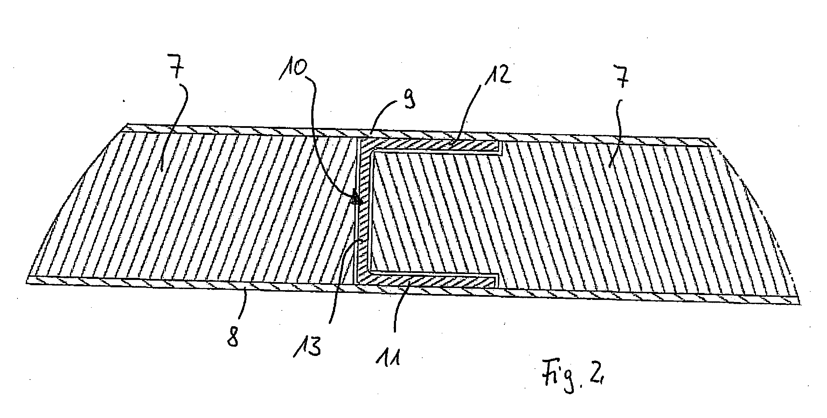

Der genaue Aufbau der Wand im Bereich der Seitenwand 3, des Bodens 4 und der Decke 5 wie der weiteren, hier nicht näher gezeigten Wände des Sattelaufliegers 1 ist in verschiedenen Ausgestaltungsvarianten in den Fig. 2, 3 und 4 dargestellt.

In Fig. 2 ist in einem Querschnitt ein Ausschnitt aus einer Wand gezeigt, der erkennen lässt, wie dort zwischen zwei vergleichsweise dünnen Deckschichten 8,9, die jeweils aus CFK bestehen, die Vakuumisolationspaneele 7 angeordnet sind. An einer Stoßstelle, an der die beiden Vakuumisolationspaneele 7 stirnseitig aneinander stoßen, befindet sich ein U-förmiges Stützprofil 10, welches mit seinen seitlichen Schenkeln 11 und 12 jeweils an der Innenseite der Deckschichten 8 bzw. 9 anliegt und mit diesen fest verbunden ist. Die Basis 13 des Stützprofils 10 ist blechartig dünn ausgebildet und läuft durch den ansonsten mit Vakuumisolationspaneelen 7 ausgefüllten Zwischenraum zwischen den Deckschichten 8 und 9. Auch das Stützprofil 10 besteht aus einem Kohlenstofffaserverbundwerkstoff (CFK), bringt also dessen hervorragende Materialeigenschaften hinsichtlich Festigkeit und Stabilität einerseits sowie Leichtgewichtigkeit andererseits mit sich. Zu erkennen ist ferner, dass die in der Figur rechts dargestellte Vakuumisolationspaneele 7 an ihrer Stirnseite in dem Bereich, wo diese zwischen den Schenkeln 11 und 12 liegt, mit verminderter Stärke ausgebildet ist, so dass die Oberflächen der Vakuumisolationspaneele 7 und der Schenkel 11 bzw. 12 auf der an den Deckschichten 8 bzw. 9 anliegenden Seite jeweils miteinander fluchten. Der gesamte Aufbau ist durch Klebetechnik miteinander verbunden, d.h. die Vakuumisolationspaneele 7 sind mit dem Stützprofil 10 verklebt, die Deckschichten 8 und 9 auf die Oberflächen der Vakuumisolationspaneele 7 aufgeklebt.

In diesem Ausführungsbeispiel bildet der Klebstoff eine Oberflächenschutzschicht, die eine unmittelbare Berührung und insbesondere ein Aneinanderreiben der aus CFK gebildeten Elemente Deckschicht 8, Deckschicht 9 und Stützprofil 10 mit den angrenzenden Vakuumisolationspaneelen 7 vermeidet, um so die empfindliche Oberfläche dieser Vakuumisolationspaneele 7, die typischerweise aus einer Aluminium-Verbund-Folie gebildet ist, zu schonen. Denn diese Oberfläche umschließt ein in dem Kern der Vakuumisolationspaneelen 7 angelagertes, hochporöses Material vakuumdicht und hält somit den Unterdruck in dem evakuierten Bereich des Kernes. Durch diesen Unterdruck ergeben sich die thermischen Isolationseigenschaften der Vakuumisolationspaneelen 7, die Ausstattung der Oberflächen mit einer Aluminium-Verbund-Folie gibt zusätzlich einen Schutz gegen Wärmeverlust durch Strahlung.

Der in Fig. 2 gezeigte Aufbau zeichnet sich dadurch aus, dass die Gesamtwandung allein durch eine zentral angeordnete Lage aus aneinander gereihten Vakuumisolationspaneelen 7 und außen- sowie innenseitig darauf aufgeordnete Deckschichten 8 bzw. 9 gebildet ist, wobei die Schichten hier eine Oberflächenschutzschicht bilden. Zur Stabilisierung der Anordnung und des Aufbaus sind die Stützprofile 10 vorgesehen, die in einer Richtung parallel zu einander verlaufend an jeder Nahtstelle zwischen aneinander angrenzenden Vakuumisolationspaneelen 7 angeordnet sind. Trotz dieses einfachen Aufbaus ist durch die geschickte Wahl der Materialkombinationen CFK und Vakuumisolationspaneelen 7 eine ausgezeichnete thermische Isolationswirkung bei zugleich genügender Stabilität der Wand erreichbar, die eine solche Beschichtung mit geringer Wandstärke für die Bildung eines erfindungsgemäßen Aufbaus 2 eines Fahrzeuges, z.B. des Sattelaufliegers 1 geeignet machen.

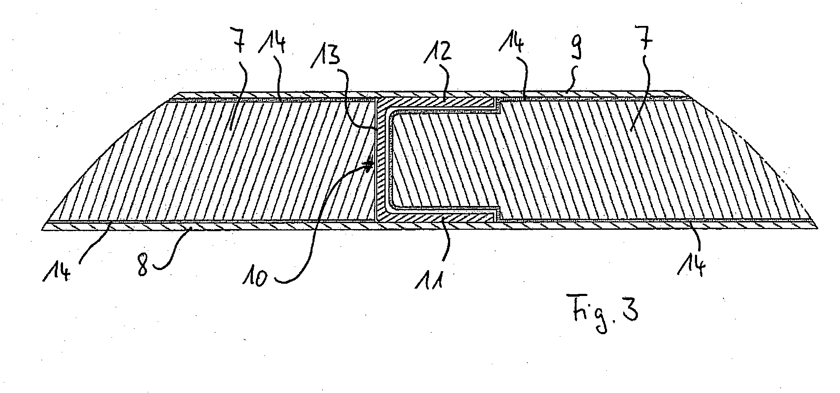

In Fig. 3 ist ein der Fig. 2 grundsätzlich vergleichbares Ausführungsbeispiel gezeigt, hier sind Vakuumisolationspaneele 7 in gleicher Weise zwischen auf die Breitseiten innenseitig und außenseitig aufgebrachten Deckschichten 8 und 9 aus CFK angeordnet und unter ist eine Stützstruktur 10 stirnseitig im Stoßbereich der Vakuumisolationspaneele 7 vorgesehen. Auch hier sind die Elemente miteinander durch Verkleben fest verbunden. Soweit ist dieses Ausführungsbeispiel gleich zu dem oben in Fig. 2 beschriebenen. Der einzige Unterschied zu dem in Fig. 2 gezeigten Ausführungsbeispiel besteht darin, dass die Vakuumisolationspaneele 7 zum Schutz ihrer empfindlichen Oberflächen mit einer Oberflächenschutzschicht in Form einer Vlieskaschierung 14 versehen sind. Diese, wie in der Figur dargestellt äußerst dünne, Oberflächenschutzschicht, gibt keine spürbare Verstärkung der Gesamtwandstärke, führt nach wie vor zu einer im Sinne der Erfindung un mittelbaren Verbindung zwischen den Vakuumisolationspaneelen 7 und den Deckschichten 8 und 9. Zu erkennen ist hierbei auch, dass die Gesamtdicke der Vakuumisolationspaneelen 7 reduziert ist gegenüber dem Abstand der Außenseiten der Schenkel 11 und 12 des Stützprofils 10 und zwar genau um die Stärke der Vlieskaschierung 14. Auf diese Weise fluchtet nun die Oberfläche der Vlieskaschierung 14 mit der Oberfläche des jeweiligen Schenkels 11 und 12 des Stützprofils 10, so dass die jeweiligen Deckschichten 8 und 9 aus CFK vollflächig aufgelegt und mit der darunter liegenden Konstruktion verklebt werden können.

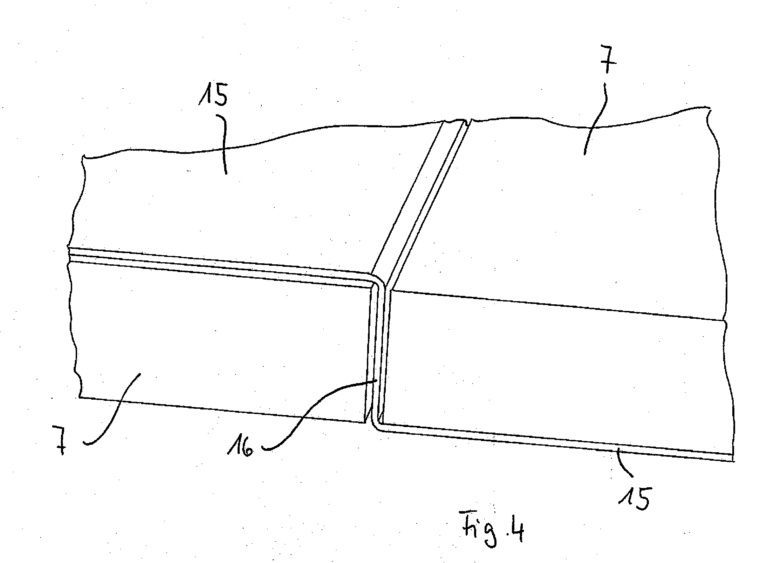

Eine weitere Variante des möglichen Aufbaus der Struktur ist in einer schematisch dreidimensionalen Ausschnittsansicht in Fig. 4 zeigt. Die Stabilisierung des Aufbaus und Ausbildung einer Verbindung zwischen den einander gegenüber liegenden Deckschichten wird hier durch eine erste alternierende Deckschicht 15 ausgebildet. Diese läuft abwechselnd bei einer ersten Vakuumisolationspaneele 7 auf der Innenseite und einer zweiten, an die erste Vakuumisolationspaneele 7 stirnseitig anstoßende Vakuumisolationspaneele 7 auf der Außenseite der Wandkonstruktion. Dazwischen verläuft die alternierende Deckschicht 15 umgelenkt und bildet einen Steg 16 aus, der einen blechartigen dünnen Verbindungssteg zwischen den einzelnen Deckschichten und damit die gewollte Stabilisierung ausbildet, wobei die benachbarten Vakuumisolationspaneele 7 an diesem Steg 16 anliegen. Hier nicht dargestellt sind abschließende Deckelemente, die auf der Innen- wie der Außenseite mit den dort verlaufenden alternierenden Deckschichten 15 bzw. den freiliegenden Vakuumisolationspaneele 7 verbunden werden müssen zur Ausbildung der Deckschichten insgesamt. Die Deckschichten auf der Innenseite und der Außenseite werden bei dieser Konstruktion also gebildet aus der alternierenden Deckschicht auf der jeweiligen Seite und den darauf aufgelegten oberen Deckschichtelementen.

Aus der voranstehenden Beschreibung der Ausführungsbeispiele ist noch einmal klar geworden, dass durch die gewählte Bauweise und Materialfolge ein gegenüber dem Stand der Technik neues und besonders vorteilhaftes Ergebnis erzielt wird, indem die Wandstärke des Aufbaus, die allein und wesentlich durch die Deckschichten und die dazwischen liegenden Vakuumisolationspaneele gebildet und bestimmt wird, gegenüber den bekannten Systemen stark reduziert wird. Zugleich geht damit einher eine Gewichtsreduzierung, so dass die oben bereits genannten Vorteile einer höheren Wirtschaftlichkeit und besseren Klimaverträglichkeit von mit solchen Aufbauten ausgerüsteten Kühlmitteltransportfahrzeugen erreicht werden können.

Abschließend sei noch angemerkt, dass anders als in der Darstellung der Fig. 1, wo der erfindungsgemäße Aufbau 2 im Zusammenhang mit einem Sattelauflieger gezeigt ist, dieser Aufbau natürlich auch an einem Zugfahrzeug oder einem selbstfahrenden Transportfahrzeug ohne Sattelauflieger und Anhänger realisiert werden kann.

### Bezugszeichenliste

- 1: Sattelauflieger
- 2: Aufbau
- 3: Seitenwand
- 4: Boden
- 5: Decke
- 6: Linie
- 7: Vakuumisolationspaneele
- 8: Deckschicht
- 9: Deckschicht
- 10: Stützprofiil
- 11: Schenkel
- 12: Schenkel
- 13: Basis
- 14: Vlieskaschierung
- 15: alternierende Deckschicht
- 16: Steg

## Patentansprüche

1. Aufbau für ein Transportfahrzeug (1), insbesondere für ein Kühltransportfahrzeug, mit ein Inneres umschließenden Seitenwandungen (3), Boden (4) und Decke (5), wobei die Seitenwandungen (3) und/oder der Boden (4) und/oder die Decke (5) mit einer inneren und einer äußeren, jeweils durchgehenden Deckschicht (8, 9; 15) und dazwischen angeordneten Vakuumisolationspaneelen (7) versehen sind, **dadurch gekennzeichnet, dass** die Deckschichten (8, 9, 15) solche aus einem Kohlenstofffaserverbundwerkstoff (CFK) sind, die gegebenenfalls unter Zwischenlage je einer Oberflächenschutzschicht zum Schutz von kratz- und stoßempfindlichen Oberflächen der Vakuumisolatibnspaneelen (7), jedenfalls aber unter Auslassung weiterer Isolations- oder Stützlagen auf den inneren und äußeren Oberflächen der Vakuumisolationspaneele (7) unmittelbar aufgelegt sind.

2. Aufbau nach Anspruch 1, **dadurch gekennzeichnet, dass** die Vakuumisolationspaneele (7) mit den Deckschichten (8, 9; 15) unmittelbar verklebt sind und die Klebstoffschichten jeweils eine Oberflächenschutzschicht bilden.

3. Aufbau nach Anspruch 1, **dadurch gekennzeichnet, dass** zwischen den Oberflächen der Vakuumisolationspaneelen (7) und wenigstens einer der Deckschichten (8, 9), vorzugweise beiden Deckschichten (8, 9), als Oberflächenschutzschicht eine Textilschicht, insbesondere eine Vlieskaschierung (14) aufgebracht ist.

4. Aufbau nach einem der vorhergehenden Ansprüche, **dadurch gekennzeichnet, dass** jedenfalls in einer Richtung zwischen Stirnseiten aneinander angrenzender Vakuumisolationspaneelen (7) Stützstrukturen (10; 16) vorhanden sind, die mit beiden Deckschichten (8, 9; 15) fest verbunden und in dem Raum zwischen den Stirnseiten der dort aneinander angrenzenden Vakuumisolationspaneelen (7) blechartig dünn ausgebildet sind.

5. Aufbau nach Anspruch 4, **dadurch gekennzeichnet, dass** die Stützstrukturen (10; 15) aus einem Kohlenstofffaserverbundwerkstoff (CFK) bestehen.

6. Aufbau nach einem der Ansprüche 4 oder 5, **dadurch gekennzeichnet, dass** die Stützstrukturen (10) durch zwischen den Decksichten (8, 9) angeordnete, an jeder der Decksichten (8, 9) mit jeweils einem Schenkel (11, 12) anliegende und mit diesen dort fest verbundene, insbesondere verklebte, U-Profile gebildet sind, an deren Basis (13) die dort aneinander angrenzenden Stirnseiten benachbarter Vakuumisolationspaneelen (7) anstoßen.

7. Aufbau nach Anspruch 6, **dadurch gekennzeichnet, dass** die mit ihren Enden zwischen den Schenkeln (11, 12) des U-Profils liegenden stirnseitigen Abschnitte der betroffenen Vakuumisolationspaneelen (7) in ihrer Stärke reduziert sind, so dass die Oberflächen der Vakuumisolationspaneelen (7), ggf. mit aufgebrachter Zwischenlage, und der Schenkel (11, 12) des U-Profils in diesem Bereich fluchten.

8. Aufbau nach einem der Ansprüche 4 oder 5, **dadurch gekennzeichnet, dass** die Stützstrukturen (16) durch Z-artig zwischen den Deckschichten (15) verlaufende und mit ihren äußeren Flächen mit den Deckschichten (15) fest verbundene Profilstrukturen gebildet sind.

9. Aufbau nach einem der vorhergehenden Ansprüche, **dadurch gekennzeichnet, dass** die Vakuumisolationspaneele (7) jeweils ein plattenförmiges, druckstabiles, hochporöses Kernmaterial und eine die Oberflächen des Kernmaterials rundum vakuumdicht verschließende Folie aufweisen, wobei der Bereich des Kernmaterials evakuiert ist.

10. Aufbau nach einem der vorhergehenden Ansprüche, **dadurch gekennzeichnet, dass** er gemessen von der frei liegenden Außenseite der äußeren Deckschicht (8, 9) bis zur gegenüberliegenden freiliegenden Außenseite der inneren Deckschicht (8, 9) eine Gesamtstärke im Bereich von 5 bis 20 mm, insbesondere von etwa 15 mm aufweist.

11. Kühltransportfahrzeug mit einem Aufbau nach einem der Ansprüche 1 bis 10.

## Claims

1. An assembly for a transport vehicle (1), in particular for a refrigerated transport vehicle, with side walls (3), a floor (4) and a ceiling (5), whereas the side walls (3) and/or the floor (4) and/or the ceiling (5) are provided with an inner or/and an outer, respectively continuous covering layer (8, 9; 15) and vacuum isolation panels (7) arranged therebetween, **characterised in that** the covering layers (8, 9, 15) are layers of a carbon fibre reinforced composite (CFK) which are laid directly on the inner and outer surfaces of the vacuum isolation panel (7), possibly by interposing a surface protective coating so as to protect scratch- and shock-sensitive surfaces of the vacuum isolation panels (7), but systematically with the omission of additional isolating or protective layers.

2. The assembly according to claim 1, **characterised in that** the vacuum isolation panels (7) are glued directly with the covering layers (8, 9; 15) and the adhesive layers respectively form a surface protective coating.

3. The assembly according to claim 1, **characterised in that** a textile layer, in particular a fleece lamination (14) is applied as a surface protective coating between the surfaces of the vacuum isolation panels (7) and at least one of the covering layers (8, 9), preferably of both covering layers (8, 9).

4. The assembly according to any of the preceding claims, **characterised in that** supporting structures (10; 16) are systematically provided in a direction between front sides of adjoining vacuum isolation panels (7) which are connected rigidly to both covering layers (8, 9; 15) and designed as thin sheets in the space between the front sides of the adjoining vacuum isolation panels (7).

5. The assembly according to claim 4, **characterised in that** the supporting structures (10; 15) consist of a carbon fibre reinforced composite (CFK).

6. The assembly according to one of the claims 4 or 5, **characterised in that** the supporting structures consist of U-shaped profiles, arranged between the covering layers (8, 9), on each of the covering layers (8, 9) with respectively with a branch (11, 12) and connected rigidly, in particular glued, thereto whereas the adjoining front sides of neighbouring vacuum isolation panels (7) abut against the base of said layers.

7. The assembly according to claim 6, **characterised in that** the thickness of the front sections of the related vacuum isolation panels (7) resting with their ends between the branches (11, 12) of the U-shaped profile is reduced so that the surfaces of the vacuum isolation panels (7) are flush-mounted **in that** region, possibly with an intermediate layer, and of the U-shaped profile.

8. The assembly according to one of the claims 4 or 5, **characterised in that** the supporting structures (16) consist of profile structures running between the covering layers (15) along a Z-shaped path and connected rigidly with the covering layers (15) with their outer faces.

9. The assembly according to one of the preceding claims, **characterised in that** the vacuum isolation panels (7) respectively include a plate-shaped, pressure-stable, highly porous and a film sealing the surfaces of the core material in a vacuum-tight manner all around, whereas the region of the core material is evacuated.

10. The assembly according to one of the preceding claims, **characterised in that** it has a total thickness in the region of 5 to 20 mm, in particular of approx. 15 mm, measured from the freely lying outer side of the outer covering layer (8, 9) up to the opposite outer side of the inner covering layer (8, 9).

11. The refrigerated transport vehicle with an assembly according to any one of the claims 1 to 10.

## Revendications

1. Structure pour véhicule de transport (1), en particulier pour véhicule de transport frigorifique, comprenant des parois latérales (3), un fond (4) et un plafond (5) entourant une partie interne, où les parois latérales (3) et/ou le sol (4) et/ou le plafond (5) sont pourvus d'une couche de revêtement interne et d'une couche de respectivement externe, respectivement continues (8, 9; 15) et de panneaux d'isolation sous vide (7) disposée entre lesdites couches, **caractérisée en ce que** les couches de revêtement (8, 9, 15) sont des couches de matériau composite renforcé de fibre de carbone (CFK) qui sont appliquées directement aux surfaces internes et externes du panneau d'isolation sous vide (7), le cas échéant en intercalant une couche de protection de surface pour protéger des surfaces résistantes aux rayures et aux chocs des panneaux d'isolation sous vide (7), respectivement à l'exclusion d'autres couches d'isolation ou d'appui.

2. Structure selon la revendication 1, **caractérisée en ce que** les panneaux d'isolation sous vide (7) sont collés directement avec les couches de revêtement (8, 9; 15) et les couches d'adhésif constituent respectivement une couche de protection de surface.

3. Structure selon la revendication 1, **caractérisée en ce qu'**une couche de textile, en particulier un voile de doublure (14) est prévu entre les surfaces des panneaux d'isolation sous vide (7) et au moins l'une des couches de revêtement (8, 9) de préférence les deux couches de revêtement (8, 9).

4. Structure selon l'une quelconque des revendications précédentes, **caractérisée en ce que** systématiquement dans une direction passant entre les faces frontales de panneaux d'isolation sous vide limitrophes (7) des structures d'appui (10; 16) sont prévues, solidaires des deux couches de revêtement (8, 9; 15) et disposés sous forme de tôles minces dans l'espace entre les faces frontales des panneaux d'isolation sous vide (7) limitrophes.

5. Structure selon la revendication 4, **caractérisée en ce que** les structures d'appui (10; 15) consistent d'un matériau composite renforcé de fibre de carbone (CFK).

6. Structure selon l'une des revendications 4 ou 5, **caractérisée en ce que** les structures d'appui sont constituées de profils en U disposés entre les couches de revêtement (8, 9), reposant contre chacune des couches de revêtement (8, 9) avec respectivement une branche (11, 12) et solidaires desdites couches, en particulier collées à celles-ci, à la base (13) de laquelle butent les faces frontales limitrophes de panneaux d'isolation sous vide voisins (7).

7. Structure selon la revendication 6, **caractérisée en ce que** l'épaisseur des sections frontales des panneaux d'isolation sous vide (7) concernés et reposant par leurs extrémités entre les branches (11, 12) du profil en forme de U sera réduite de sorte que les surfaces des panneaux d'isolation sous vide (7), le cas échéant avec la couche intermédiaire appliquée, et des branches (11, 12) du profil en U vont affleurer dans cette zone.

8. Structure selon l'une des revendications 4 ou 5, **caractérisée en ce que** les structures d'appui (16) sont constituées de structures de profil passant entre les couches de revêtement (15) en forme de Z et solidaires des couches de revêtement (15) par leurs faces externes.

9. Structure selon l'une quelconque des revendications précédentes, **caractérisée en ce que** les panneaux d'isolation sous vide (7) présentent respectivement un matériau de noyau en forme de plaque, stable en pression et extrêmement poreux et un film scellant hermétiquement les surfaces du matériau de noyau et de manière complètement étanche au vide, tandis que la zone du matériau de noyau est évacuée.

10. Structure selon l'une quelconque des revendications précédentes, **caractérisée en ce qu'**elle présente une épaisseur totale comprise entre 5 et 20 mm, de préférence d'environ 15 mm, mesurée depuis la face externe libre de la couche de revêtement externe (8, 9) jusqu'à la face externe libre opposée de la couche de revêtement interne (8, 9).

11. Véhicule de transport frigorifique avec une structure selon l'une des revendications 1 à 10.
